# EUROPÄISCHE PATENTANMELDUNG

(11) **EP 4 685 029 A1**
(43) Veröffentlichungstag der Anmeldung: **28.01.2026**
(21) Anmeldenummer: 25176412.2
(22) Anmeldetag: 14.05.2025
(51) Int. Cl.: B61H 5/00, F16D 65/18

(54) **KOMPAKT-BREMSZANGENEINHEIT MIT TANDEM-BREMSZYLINDER FÜR EIN SCHIENENFAHRZEUG**

(30) Priorität: 24.07.2024 DE 102024121087
(71) Anmelder: KNORR-BREMSE Systeme für Schienenfahrzeuge GmbH, 80809 München (DE)
(72) Erfinder: MÜLLEK, Ferenc, 8000 Szekesfehervar (HU); ELSTORPFF, Marc-Gregory, 80368 München (DE); ADAM, Zsolt, 2092 Budakeszi (HU); CSEMEZ, Zoltan, 1238 Budapest (HU); SKRIONYA, David, 1164 Budapest (HU)

(57) **Zusammenfassung**

Eine Kompakt-Bremszangeneinheit (1), insbesondere für Schienenfahrzeuge, umfasst ein Hauptgehäuse (2) und einen Tandem-Bremszylinder (100). Der Tandem-Bremszylinder (100) weist mindestens zwei einzelne Zylindermodule (3, 4) auf, welche hintereinander in Reihe geschaltet in dem Hauptgehäuse (2) angeordnet sind.

## Beschreibung

Die Erfindung betrifft eine Kompakt-Bremszangeneinheit mit Tandem-Bremszylinder für ein Schienenfahrzeug nach dem Oberbegriff des Anspruchs 1.

Mit diesen Kompakt-Bremszangeneinheiten sind Schienenfahrzeuge, beispielsweise Drehgestelle, Wellen- und Radscheibenbremsen, ausgerüstet.

Kompakt-Bremszangeneinheiten sind mit einem in einem Hauptgehäuse eingebauten Betriebs-Bremszylinder ausgestattet. Als Druckmedium wird vorzugsweise Druckluft verwendet. Abhängig von den Systemanforderungen sind Betriebs-Bremszylinder in verschiedenen Größen erhältlich.

Das Dokument WO 2008 / 116 629 A1 (EP 2 134 581 A1) beschreibt einen Kompakt-Kombizylinder mit manueller Lösevorrichtung.

Die Dokumente CN 210218506 U; CN 103089424 A CN 209324775 U; CN 106015155 B geben Beispiele für Tandem-Bremszylinder an.

Als nachteilig werden die Hüllabmessungen des Hauptgehäuses angesehen, da diese bei einer Kompakt-Bremszangeneinheit Schlüsselfaktoren sind für den Einbau der Einheit, z.B. in das Drehgestell sind.

Darüber hinaus erfordern bestimmte Anwendungen eine hohe Bremskraft, ohne dass der Druck des Druckmediums, hier Luftdruck, erhöht werden kann. Bei unveränderten Gehäuseabmessungen kann sich der größtmögliche Zylinder in bestimmten Anwendungen als zu klein erweisen.

Daher besteht die Aufgabe der Erfindung darin, eine verbesserte Kompakt-Kompakt-Bremszangeneinheit zu schaffen, welche die oben genannten Nachteile nicht mehr oder größtenteils nicht mehr aufweist.

Die Aufgabe wird durch eine Kompakt-Bremszangeneinheit mit den Merkmalen des Anspruchs 1 gelöst.

Vorteilhafte Weiterbildungen der Erfindung sind durch die Gegenstände der Unteransprüche angegeben.

Ein Erfindungsgedanke besteht darin, eine Kompakt-Bremszangeneinheit mit einem doppelten (Tandem-) Betriebsbremszylinder auszurüsten.

Damit ergeben sich folgende Vorteile:
- Ausübung einer hohen Bremskraft bei nicht erhöhtem Druckniveau
- Einhaltung der Hüllabmessungen des Hauptgehäuses

Eine erfindungsgemäße Kompakt-Bremszangeneinheit, insbesondere für Schienenfahrzeuge, umfasst ein Hauptgehäuse mit einem Tandem-Bremszylinder. Der Tandem-Bremszylinder weist mindestens zwei einzelne Zylindermodule auf, welche hintereinander in Reihe geschaltet in dem Hauptgehäuse angeordnet sind.

Es ergibt sich der besondere Vorteil, dass mittels der mindestens zwei in Reihe geschalteten Zylindermodule, die einen Tandem-Bremszylinder bilden, ein kompakter Betrieb der Kompakt-Bremszangeneinheit mit hoher Bremskraft ermöglicht werden kann. Gleichzeitig können die Hüllabmessungen der Kompakt-Bremszangeneinheit beibehalten werden.

Zudem ist es vorteilhat, dass der Volumendruck nicht erhöht wird. Ein Einsatz ist in einem äußerst sicherheitskritischen System bei Schienenfahrzeugen ermöglicht.

Die Anzahl der Zylinder beträgt vorzugsweise zwei, da dies einen kompakten Betrieb mit hoher Bremskraft ermöglicht. Wenn möglich und für den jeweiligen Einsatzfall vorteilhaft, können jedoch auch mehr einzelne Zylindermodule verwendet werden.

In einer Ausführung ist in dem Hauptgehäuse eine zentrale Aufnahme eingeformt, welche aus Aufnahmebohrungen gebildet ist, die zu einer Mittelachse des Hauptgehäuses koaxial sind, und in welcher der Tandem-Bremszylinder angeordnet ist. Damit ergibt sich ein vorteilhaft kompakter Aufbau.

In weiterer Ausführung weist jedes der mindestens zwei einzelnen Zylindermodule ein Zylindergehäuse mit einem jeweiligen Kolben und mit einer jeweiligen Kolbenstange auf. Dies ist vorteilhaft, da so eine einfache Montage und Fertigung aufgrund gleicher bzw. ähnlicher Teile möglich ist.

Es ist zudem vorteilhaft, dass in einer anderen Ausführung die Zylindergehäuse der mindestens zwei Zylindermodule in den Aufnahmebohrungen des Hauptgehäuses eingesetzt und befestigt sind, wodurch ein einfacher Einbau und Austausch ermöglicht ist.

Eine Ausführung sieht vor, dass die Kolbenstange des ersten Zylindermoduls mit einem ersten Kolbenstangenende mit dem Kolben des ersten Zylindermoduls verbunden ist und mit einem zweiten Kolbenstangenende mit einem Exzenterwellenhebel einer Exzenterwelle der Kompakt-Bremszangeneinheit gekoppelt ist und mit diesem zusammenwirkt. Diese Kolbenstange des ersten Zylindermoduls bildet auf diese Weise vorteilhaft die Ausgangs-Kolbenstange des Tandem-Zylinders.

In einer Ausführung weist das erste Kolbenstangenende der ersten Kolbenstange des ersten Zylindermoduls eine Aufnahme für ein zweites Kolbenstangenende der zweiten Kolbenstange auf. Damit wird eine vorteilhaft einfache Kopplung der beiden Kolbenstangen der Zylindermodule erreicht, wobei die zweite Kolbenstange des zweiten Zylindermoduls auf den Kolben und die erste Kolbenstange des ersten Zylindermoduls wirkt.

Dazu kann die Aufnahme der Kolbenstange des ersten Zylindermoduls ein Druckstück aufweisen, welches mit dem zweiten Kolbenstangenende der zweiten Kolbenstange zusammenwirkt. Dies ist vorteilhaft, da das Druckstück separat gefertigt und z.B. unabhängig von der ersten Kolbenstange wärmebehandelt werden kann, z.B. gehärtet.

In einer weiteren Ausführung sind Druckräume der mindestens zwei einzelnen Zylindermodule verbunden und weisen einen gemeinsamen Anschluss für ein Druckmedium auf. Hierbei ergibt sich der Vorteil, dass ein gleiches Druckniveau in beiden Zylindermodulen gewährleistet ist.

Eine noch weitere Ausführung sieht vor, dass die verbundenen Druckräume der mindestens zwei einzelnen Zylindermodule über die zweite Kolbenstange verbunden sind. Dies ergibt einen vorteilhaft kompakten Aufbau.

In einer weiteren Ausführung ist die Aufnahme für die zweite Kolbenstange in der ersten Kolbenstange mit dem Druckraum des ersten Zylindermoduls verbunden und kommuniziert mit einem Axialkanal in der zweiten Kolbenstange, wobei der Axialkanal mit dem Druckraum des zweiten Zylindermoduls kommuniziert. Ein Vorteil dabei ist ein einfacher und kompakter Aufbau.

Es ist in einer anderen Ausführung vorgesehen, dass der Druckraum des ersten Zylindermoduls mit einem umlaufenden Mantelkanal kommuniziert, wobei der Mantelkanal zwischen zwei Kragenabschnitten des Zylindergehäuses des ersten Zylindermoduls, einer Außenseite dieses Zylindergehäuses und einer Innenwand einer Aufnahmebohrung des Hauptgehäuses festgelegt und mit einem Anschluss für ein Druckmedium verbunden ist. Damit ist ein kompakter Aufbau vorteilhaft ermöglicht.

Eine alternative Ausführung sieht vor, dass die Druckräume der mindestens zwei Zylindermodule mit separaten Druckleitungen mit separaten Anschlüssen kommunizieren. Damit ist eine separate Steuerung der Zylindermodule möglich, woraus sich vorteilhaft eine bessere Kraftkontrolle ergibt, was bei einem Niederdruckbetrieb widerstandsfähigere Ausführung ermöglicht.

Ein Ausführungsbeispiel der Erfindung wird nachfolgend anhand der beigefügten Zeichnungen beschrieben.

Es zeigen:
- Figur 1: eine schematische Schnittdarstellung eines Ausführungsbeispiels einer erfindungsgemäßen Kompakt-Bremszangeneinheit mit einem Tandem-Bremszylinder; und
- Figur 2: stellt eine schematische vergrößerte Schnittansicht des Tandem-Bremszylinders des Ausführungsbeispiels nach Figur 1 dar.

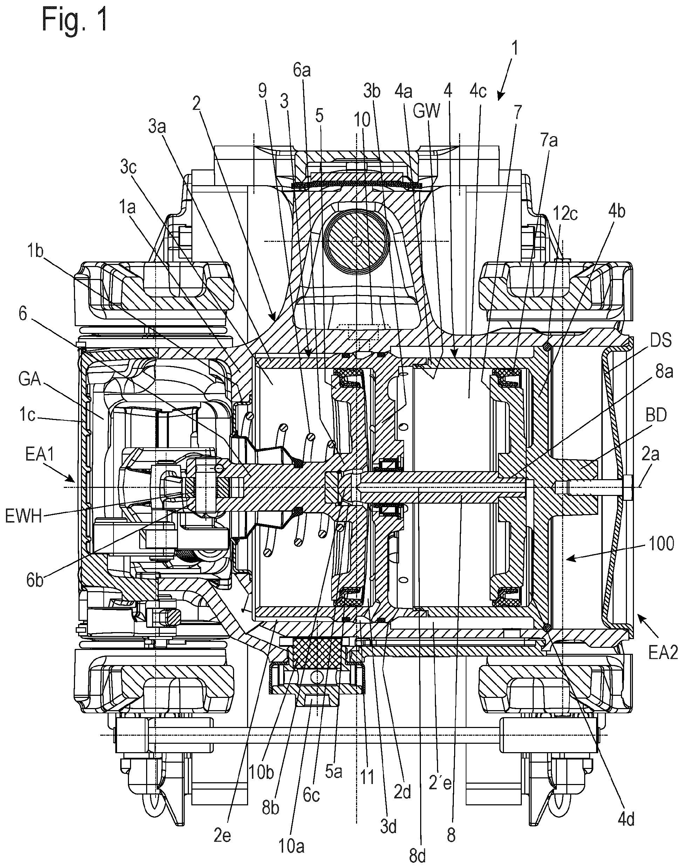

Die Begriffe "unten", "oben", "links" und "rechts" beziehen sich auf die Anordnung(en) in der jeweiligen Figur. **Figur 1** zeigt eine schematische Schnittdarstellung eines Ausführungsbeispiels einer erfindungsgemäßen Kompakt-Bremszangeneinheit 1 mit einem Tandem-Bremszylinder 100.

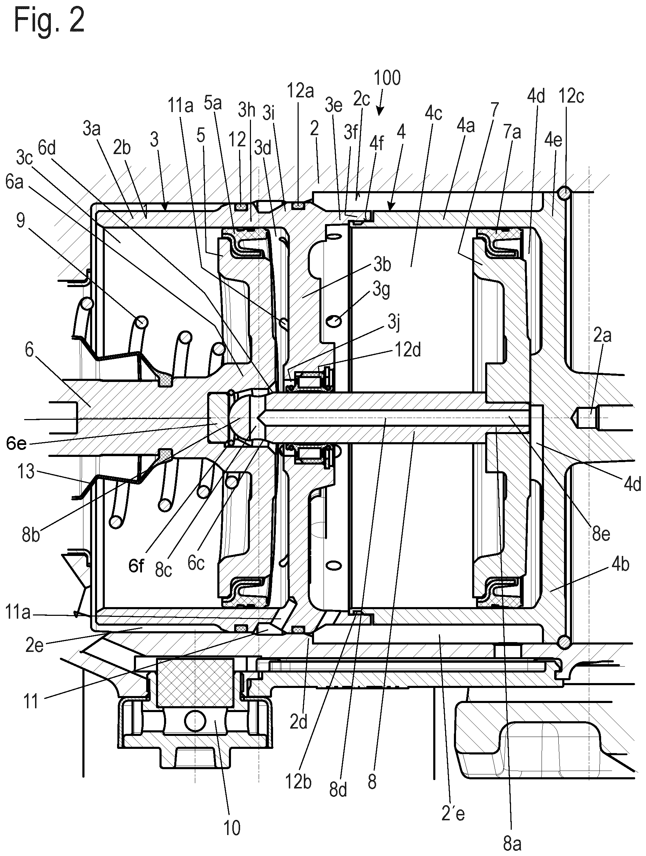

**Figur 2** stellt eine schematische vergrößerte Schnittansicht des Tandem-Bremszylinders 100 des Ausführungsbeispiels nach Figur 1 dar.

Die Kompakt-Bremszangeneinheit 1 wird auch als Kompakt-Kompakt-Bremszangeneinheit bezeichnet und ist Teil einer Scheibenbremse, insbesondere für Schienenfahrzeuge, wie beispielsweise in EP 2 531 741 B1, EP 0 777 598 B1 u.a. beschrieben.

Die Kompakt-Bremszangeneinheit 1 weist einen Bremszylinder auf, der hier als ein Tandem-Bremszylinder 100 ausgebildet ist.

Die Kompakt-Bremszangeneinheit 1 umfasst ein Hauptgehäuse 2 mit einer Mittelachse 2a und den Tandem-Bremszylinder 100. Auf Befestigung und weitere Einzelheiten der Kompakt-Bremszangeneinheit 1 soll hier nicht eingegangen werden.

In das Hauptgehäuse 2 ist eine zentrale Aufnahme eingeformt, welche aus zwei zu der Mittelachse 2a koaxialen Aufnahmebohrungen 2b und 2c besteht. Die beiden Aufnahmebohrungen 2b, 2c sind über eine Stufe 2d hintereinander angeordnet.

Ein Innendurchmesser der ersten Aufnahmebohrung 2b ist kleiner als ein Innendurchmesser der zweiten Aufnahmebohrung 2c.

Die erste Aufnahmebohrung 2b ist durch eine Wand 1a von einem Gehäuseabschnitt GA getrennt, in welchem eine Exzenterwelle mit einem Exzenterwellenhebel EWH angeordnet ist und welcher einen ersten Endabschnitt EA1 der Kompakt-Bremszangeneinheit 1 bildet. Eine Durchgangsöffnung 1b ist in Wand 1a eingeformt, durch welche sich eine Kolbenstange 6 des Tandem-Bremszylinders 100 erstreckt. Dies wird unten noch beschrieben.

Der Gehäuseabschnitt GA ist an der Seite des ersten Endabschnitts EA1 durch eine Stirnwand 1c verschlossen.

Ein zweiter Endabschnitt EA2 der Kompakt-Bremszangeneinheit 1, welcher in Richtung der Mittelachse 2a dem ersten Endabschnitt EA1 gegenüberliegt, weist eine Öffnung der zweiten Aufnahmebohrung 2c auf. Diese Öffnung ist durch eine Deckelscheibe DS verschlossen.

Der Tandem-Bremszylinder 100 umfasst hier zwei Zylindermodule 3, 4, die in Reihe hintereinander in den Aufnahmebohrungen 2b, 2c angeordnet sind.

Jedes der Zylindermodule 3, 4, weist ein Zylindergehäuse 3a, 4a mit einer jeweiligen Stirnwand 3b, 4b auf. Zwischen der jeweiligen Stirnwand 3b, 4b und dem jeweiligen Zylindergehäuse 3, 4 ist ein jeweiliger Zylinderraum 3c, 4c mit einem kreisförmigen Querschnitt festgelegt. Der Zylinderraum 3c, 4c ist gegenüberliegend der Stirnwand 3b, 4b offen.

In axialer Richtung ist das Zylindergehäuse 3a des ersten Zylindermoduls 3 über die Stirnwand 3b hinaus durch einen Ringabschnitt 3e verlängert. Der Ringabschnitt 3e ist an seinem freien Ende mit einem Verbindungsabschnitt 3f versehen, über welchen das Zylindergehäuse 4a des zweiten Zylindermoduls 4 mit dem Zylindergehäuse 3a des ersten Zylindermoduls 3 verbunden ist. Dies ist unten noch näher erläutert.

In die Wand des Ringabschnitts 3e sind umlaufend Öffnungen 3g eingeformt, welche unten noch beschrieben werden.

Von der Außenseite des Zylindergehäuses 3a des ersten Zylindermoduls 3 stehen zwei umlaufende Kragenabschnitte 3h, 3i radial hervor, von denen ein zweiter Kragenabschnitt 3i eine radiale Verlängerung der Stirnwand 3b bildet.

Die beiden Kragenabschnitte 3h, 3i sind axial in einem Abstand angeordnet und legen zwischen sich, der Außenseite des Zylindergehäuses 3a des ersten Zylindermoduls 3 und der Innenwand der ersten Aufnahmebohrung 2b des Hauptgehäuses 2 einen umlaufenden Mantelkanal 11 fest. Der axiale Abstand der Kragenabschnitte 3h, 3i entspricht in diesem Beispiel etwa der axialen Dicke der Stirnwand 3b.

Die Kragenabschnitte 3h, 3i weisen an ihren Außenseiten jeweils ein umlaufende Nut für ein Dichtungselement 12, 12a auf.

Ein Außendurchmesser der Kragenabschnitte 3h, 3i korrespondiert zu einem Innendurchmesser der ersten Aufnahmebohrung 2b des Hauptgehäuses 2, in welcher das Zylindergehäuse 3a des ersten Zylindermoduls 3 nach Einschieben durch die zweite Aufnahmebohrung 2c hindurch eingesetzt ist.

In die Stirnwand 3b ist eine zentrale Durchgangsöffnung 3j eingeformt, durch welche sich im zusammengebauten Zustand eine Kolbenstange 8 des zweiten Zylindermoduls 4 erstreckt, was unten noch weitere im Detail beschrieben wird.

Die Öffnung des Zylinderraums 3c des Zylindergehäuses 3a weist im eingebauten Zustand zu der Wand 1a. Die Dichtungselemente 12, 12a auf den Kragenabschnitten 3h, 3i dichten den zwischen ihnen festgelegten Mantelkanal 11 gegenüber der Innenwand der ersten Aufnahmebohrung 2b ab.

In dem Zylinderraum 3c des ersten Zylindergehäuses 3a ist ein erster Kolben 5 angeordnet. Das Attribut "erster" bezieht sich hier auf die Zugehörigkeit dieses Kolbens 5 zu dem ersten Zylindermodul 3 und somit zu dem Tandem-Bremszylinder 100. Der erste Kolben 5 ist mit einer umlaufenden Kolbendichtung 5a versehen und in dem Zylinderraum 3c verschiebbar in Richtung der Mitteachse 2a geführt, wobei die Kolbendichtung 5a den ersten Kolben 5 gegen über einer Innenwand des Zylinderraums 3c abdichtet. Zwischen einer Stirnseite des ersten Kolbens 5 und der Innenseite der Stirnwand 3b ist ein Druckraum 3d festgelegt.

Der erste Kolben 5 ist mit einer Kolbenstange 6 verbunden. Die Kolbenstange 6 ist auch gleichzeitig das Ausgangselement des Tandem-Bremszylinders 100. Ein erstes Kolbenstangenende 6a ist mit dem ersten Kolben 5 hier einstückig ausgebildet. Das erste Kolbenstangenende 6a ist im Bereich der Verbindung mit dem ersten Kolben 5 mit einer zentralen Aufnahme 6c für ein zweites Kolbenstangenende 8a einer Kolbenstange 8 des zweiten Zylindermoduls 4 versehen. Die Aufnahme 6c kommuniziert mit dem Druckraum 3d. Dies wird unten noch näher beschrieben.

Ein Kraftspeicherelement 9 ist um die Kolbenstange 6 herum angeordnet. Das Kraftspeicherelement 9 ist hier eine kegelförmige Druckfeder, die sich mit einem Ende an dem Kolben 5 und mit einem anderen Ende an der Wand 1a abstützt.

Die Kolbenstange 6 erstreckt sich wie oben bereits kurz beschrieben durch eine Öffnung der Wand 1a in den Gehäuseabschnitt GA, wobei ein zweites Kolbenstangenende 6b der Kolbenstange 6 mit dem Exzenterwellenhebel EWH der Exzenterwelle gekoppelt ist und mit diesem zusammenwirkt. Die Kolbenstange 6 bildet so eine Ausgangs-Kolbenstange des Tandem-Bremszylinders 100.

Ein Faltenbalg 13 ist in der Öffnung der Wand 1a mit einem Ende befestigt, wobei das andere Ende des Faltenbalgs 13 an der Kolbenstange 6 angebracht ist und eine Dichtung zu dem Zylinderraum 3c bildet. Der Faltenbalg 13 ist mit einem Federteller ausgebildet, was nicht näher beschrieben ist.

In der zentralen Aufnahme 6c der ersten Kolbenstange 6 ist ein Druckstück 6e angeordnet, welches mit einer Axialsicherung 6f an dem Boden der Aufnahme 6c fixiert ist.

Die zentrale Aufnahme 6c bildet eine Aufnahme ein zweites Kolbenstangenende 8b der Kolbenstange 8 des zweiten Zylindermoduls 4

Das zweite Zylindermodul 4 ist ähnlich wie das erste Zylindermodul 3 aufgebaut.

Im Unterschied zu dem Zylindergehäuse 3a ist das Zylindergehäuse 4a an der offenen Seite des Zylinderraums 4c mit einem Verbindungsabschnitt 4f ausgebildet, der korrespondierend zu dem Verbindungsabschnitt 3f des Ringabschnitts 3e des Zylindergehäuses 3a des ersten Zylindermoduls 3 mit einer umlaufenden Ausnehmung versehen ist. Der Verbindungsabschnitt 3f und der Verbindungsabschnitt 4f sind mit einem Gewinde 12b versehen, wobei der Verbindungsabschnitt 3f den zugehörigen Innengewindeabschnitt und der Verbindungsabschnitt 4f den zugehörigen Außengewindeabschnitt aufweist. Das Gewinde 12b ist hier als ein kurzes Feingewinde ausgebildet.

Auf diese Weise kann das Zylindergehäuse 4a des zweiten Zylindermoduls 4 in die Öffnung des Ringabschnitts 3e mittels des Gewindes 12b eingeschraubt werden. Das Gewinde 12b bildet eine lösbare Verbindung des ersten Zylindergehäuses 3a und des zweiten Zylindergehäuses 4a.

Auf diese Weise können die beiden Zylindergehäuse 3a, 4a und beiden Kolben 5, 7 in einer Baugruppe vormontiert und in diesem Zustand als Baugruppe in das Hauptgehäuse 2 eingeschoben werden.

Anstelle des Gewindes 12b könnte diese lösbare Verbindung auch als ein Bajonettverschluss ausgebildet sein.

Diese lösbare Verbindung über das Gewinde 12b der beiden Zylindergehäuse 3a, 4a leitet eine Reaktionskraft der von dem erstem Zylindergehäuse 3a des ersten Zylindermoduls 3 erzeugten Kolbenkraft in das zweite Zylindergehäuse 4a des zweiten Zylindermoduls 4, und wo sie mit der Reaktionskraft des zweiten Zylindergehäuses 4a des zweiten Zylindermoduls 4 zusammenaddiert wird. Diese beiden Reaktionskräfte werden dann über einen axialen Sicherungsring 12c in das Hauptgehäuse 2 ausgeleitet. Dies wird unten noch näher beschrieben.

Dabei erfolgt eine Zentrierung der beiden Zylindergehäuse 3a, 4a in den Aufnahmebohrungen 2b, 2c des Hauptgehäuses 2 derart, dass die Mittelachse 2a eine gemeinsame Mittelachse 2a der Zylindermodule 3 und 4 ist.

In dem zusammengebauten Zustand ist das Zylindergehäuse 4a des zweiten Zylindermoduls 4 in die zweite Aufnahmebohrung 2c des Hauptgehäuses 2 eingeschoben und wie oben beschrieben mit dem Zylindergehäuse 3a des ersten Zylindermoduls 3 verbunden. Dabei kontaktiert ein Außendurchmesser eines Flanschabschnitts 4e, der eine radiale Verlängerung der Stirnwand 4b des Zylindergehäuses 4a des zweiten Zylindermoduls 4 bildet, die Innenwand der zweiten Aufnahmebohrung 2c. Das Sicherungselement 12c bildet eine axiale Festlegung des Flanschabschnitts 4e des zweiten Zylindergehäuses 4a gegenüber der zweiten Aufnahmebohrung 2c des Hauptgehäuses 2. Das Sicherungselement 12c ist beispielsweise ein Sprengring, der in einer umlaufenden Nut der Innenwand der zweiten Aufnahmebohrung 2c eingesetzt ist.

An der Seite der Stirnwand 4b des zweiten Zylindermoduls 4, die zu dem zweiten Endabschnitt EA2 der Kompakt-Bremszangeneinheit 1 weist, ein zentraler Befestigungsdom BD angeformt, welcher zu dem zweiten Endabschnitt EA2 hervorsteht und eine Befestigung mit dem Deckel DS ermöglicht. Dies soll hier nicht weiter beschrieben werden.

Ein axiale Fixierung der Zylindergehäuse 3a, 4a des Tandem-Bremszylinders 100 in den Aufnahmebohrungen 2a, 2b des Hauptgehäuses 2 ist wie oben beschrieben durch das Sicherungselement 12c realisiert.

Im zusammengebauten Zustand sind die Zylinderräume 3c, 4c, die Kolben 5, 7 und die Kolbenstangen 6, 8 koaxial zueinander, koaxial zu den Aufnahmebohrungen 2a, 2b und koaxial zu der Mittelachse 2a des Hauptgehäuses 2 angeordnet.

In dem Zylinderraum 4c des zweiten Zylindergehäuses 4a des zweiten Zylindermoduls 4 ist ein zweiter Kolben 7 angeordnet. Das Attribut "zweiter" bezieht sich hier auf die Zugehörigkeit dieses Kolbens 7 zu dem zweiten Zylindermodul 4 und somit zu dem Tandem-Bremszylinder 100. Der zweite Kolben 7 ist wie der erste Kolben 5 mit einer umlaufenden Kolbendichtung 7a versehen und in dem Zylinderraum 4c verschiebbar in Richtung der Mittelachse 2a geführt, wobei die Kolbendichtung 7a den zweiten Kolben 7 gegenüber einer Innenwand des Zylinderraums 4c abdichtet. Zwischen einer Stirnseite des zweiten Kolbens 7 und der Innenseite der Stirnwand 4b ist ein Druckraum 4d festgelegt.

Der zweite Kolben 7 ist mit der Kolbenstange 8 verbunden. Ein erstes Kolbenstangenende 8a ist hier mit dem zweiten Kolben 5 fest verbunden, z.B. eingepresst, verschraubt o.dgl., wobei sich das Kolbenstangenende 8a durch den zweiten Kolben 7 hindurch erstreckt und plan an der Druckseite des zweiten Kolbens 7 mit einer Mündung 8e endet.

Die Kolbenstange 8 des zweiten Zylindermoduls 4 erstreckt sich durch die zentrale Durchgangsöffnung 3j in der Stirnwand 3b des Zylindergehäuses 3a des ersten Zylindermoduls 3 und ist gegenüber der Stirnwand 3b mittels eines Dichtungselementes 12d abgedichtet.

Ein zweites Kolbenstangenende 8b der Kolbenstange 8 ist in der zentralen Aufnahme 6c der Kolbenstange 6 des ersten Zylindermoduls 3 aufgenommen. Das zweite Kolbenstangenende 8b ist halbkugelförmig ausgebildet und steht in Kontakt mit dem Druckstück 6e der Kolbenstange 6.

Die Kolbenstange 8 des zweiten Zylindermoduls 4 ist im Bereich des zweiten Kolbenstangenendes 8b neben dem Halbkugelkopf mit einem Radialkanal 8c versehen, welcher in Kommunikation mit einem Raum der Aufnahme 6c des ersten Kolbenstangenendes 6a der Kolbenstange 6 steht.

Der Radialkanal 8c wiederum steht mit einem Axialkanal 8d der Kolbenstange 8 in Verbindung. Der Axialkanal 8d ist als eine zentralen Längsbohrung in der Kolbenstange 8 ausgebildet. Der Axialkanal 8d kommuniziert über die Mündung 8e in dem ersten Kolbenstangenende 8a der Kolbenstange 8 mit dem Druckraum 4d des Zylindergehäuses 4a des zweiten Zylindermoduls 4.

Die Aufnahme 6c ihrerseits kommuniziert zudem über eine Mündung 6d mit dem Druckraum 3d des ersten Zylindermoduls 3.

Auf diese Weise kommunizieren die beiden Druckräume 3d und 4d der Zylindermodule 3 und 4 des Tandem-Bremszylinders 100.

Der Druckraum 3d des ersten Zylindermoduls 3 ist mit dem umlaufenden Mantelkanal 11 über weitere Kanäle 11a verbunden.

Der umlaufende Mantelkanal 11 kommuniziert mit einem Anschluss 10 für ein Druckmedium, z.B. Druckluft. Der Anschluss 10 ist gestrichelt dargestellt, da er in der Ansicht der Figur 1 nicht sichtbar ist.

In diesem Ausführungsbeispiel erfolgt eine gemeinsame Versorgung der beiden Zylindermodule 3 und 4 mit Druckmedium, das durch den Anschluss 10 den Druckraum 3d des ersten Zylindermoduls 3 und von diesem über den Axialkanal 8 der Kolbenstange 8 den Druckraum 4d des zweiten Zylindermoduls 4 und somit den Tandem-Bremszylinder 100 mit Druck beaufschlagt. Somit ist ein gleiches Druckniveau in beiden Zylindermodulen 3, 4 des Tandem-Bremszylinders 100 gewährleistet und die Kolben 5, 7 und die zugehörigen Kolbenstangen 6, 8 bewegen sich in Richtung der Mittelachse 2a auf den Endabschnitt EA1 hin.

Bei diesen Bewegungen der Kolben 5 und 7 wird die in den jeweiligen Zylinderräumen 3c und 4c befindliche Luft nach außen geführt. Bei dem ersten Zylindermodul 3 erfolgt dies über einen Mantelraum 2e zwischen der Außenseite des Zylindergehäuses 3a und der ersten Aufnahmebohrung 2b. Der Mantelraum 2e ist mit einer zentralen Entlüftung 10a in die Umgebungsatmosphäre verbunden. Die Entlüftung 10a weist ein Filterelement 10b, z.B. ein Staubfilter, auf.

Bei dem zweiten Zylindermodul 4 entweicht die Luft aus dem Zylinderraum 4c durch Öffnungen 3g in dem Ringabschnitt 3e des Zylindergehäuses 3a des ersten Zylindermoduls 3 in einen weiteren Mantelraum 2'e, der sich zwischen der Außenseite des Ringabschnitts 3e des Zylindergehäuses 3a des ersten Zylindermoduls 3, der Außenseite des Zylindergehäuses 4a des zweiten Zylindermoduls 4 und der Innenwand der zweiten Aufnahmebohrung 2c gebildet ist. Auch der weitere Mantelraum 2'e kommuniziert mit der Entlüftung 10a.

Durch die zentrale Entlüftung 10a mit dem Staubfilter wird Luft aus der Umgebungsatmosphäre in den jeweiligen Zylinderraum 3c und 4c zurückgesaugt, wenn die Kolben 5, 7 beim Lösen der Bremse in Ausgangsposition zurückfahren.

Die Zylindermodule 3, 4 des Tandem-Bremszylinders 100 sind in Reihe geschaltet. Mit anderen Worten, die Kolbenstange des ersten Kolbens 5 des ersten Zylindermoduls 3 wirkt auf den Exzenterwellenhebel EWH, während die Kolbenstange des zweiten Kolbens 7 des zweiten Zylindermoduls 4 auf den ersten Kolben 5 und dessen Kolbenstange 6 wirkt.

Es ist zudem in einem nicht gezeigten Ausführungsbeispiel möglich, dass die Druckräume 3d, 4d der beiden Zylindermodule 3, 4 des Tandem-Bremszylinders 100 unabhängig voneinander mit Druckmedium versorgt werden. Dazu ist eine separate Führung der Druckkanäle erforderlich. Dies ist nicht gezeigt, aber leicht vorstellbar.

Eine solche separate Steuerung ermöglicht eine bessere Kraftkontrolle und ist bei Niederdruckbetrieb widerstandsfähiger.

Zudem ist es vorteilhat, dass der Volumendruck nicht erhöht wird. Ein Einsatz ist in einem äußerst sicherheitskritischen System bei Schienenfahrzeugen ermöglicht.

Die Anzahl der Zylindermodule 3, 4 des Tandem-Bremszylinders 100 beträgt vorzugsweise zwei, da dies einen kompakten Betrieb mit hoher Bremskraft ermöglicht. Es können jedoch auch mehr Zylindermodule verwendet werden.

In einer Ausführung weisen die Verbindungsabschnitte 3f, 4f der Zylindergehäuse 3a, 4a kein Gewinde 12b auf. In diesem Fall erfolgt keine Vormontage in einer Baugruppe und die Verbindung der Verbindungsabschnitte 3f, 4f der Zylindergehäuse 3a, 4a ist nur als eine einfache Schulter mit Spielpassung ausgebildet. Dies erzwingt eine Koaxialität und ermöglicht die axiale Überleitung der Druckkraft.

Zugkräfte entstehen hier nicht, da der Druck im jeweiligen Zylindergehäuse 3a, 4a immer nur in eine Richtung drückt.

In diesem Fall ohne Vormontage werden das erste Zylindergehäuse 3a mit dem Kolben 5 und der Kolbenstange 6, welche in dem ersten Zylindergehäuse 3a vormontiert sind, und die Kegelfeder als Kraftspeicherelement 9 und der Faltenbalg 13 zuerst durch die zweite Aufnahmebohrung 2c in die erste Aufnahmebohrung 2b des Hauptgehäuses 2 eingeschoben. Danach folgt das zweite Zylindergehäuse 4a mit vormontiertem Kolben 7 einschließlich Kolbenstange 8. Diese werden in die zweite Aufnahmebohrung 2c eingeschoben. Mittels des Sicherungselementes 12c (Sprengring) erfolgt dann eine axiale Festlegung der beiden Zylindergehäuse 3a, 4a gegenüber dem Hauptgehäuse 2. Schließlich wird dann der Deckel DS montiert.

Wenn kein Druck im jeweiligen Zylindermodul 3, 4 vorhanden ist, dann wirkt nur die Kraft des Kraftspeicherelementes 9 (Kolbenrückdruckfeder, konische Feder) auf Kolbenstange 6 und Druckscheibe 7 und Kolbenstange 8 und Kolben 7 an das Zylindergehäuse 4b.

Die Erfindung ist durch das oben angegebene Ausführungsbeispiel nicht eingeschränkt, sondern im Rahmen der Ansprüche modifizierbar.

So ist es z.B. denkbar, dass das erste Kolbenstangenende 8a der Kolbenstange 8 des zweiten Zylindermoduls 4 einstückig mit dem Kolben 7 des zweiten Zylindermoduls 4 ausgebildet ist.

### Bezugszeichenliste

- 1: Kompakt-Bremszangeneinheit
- 1a: Wand
- 1b: Durchgangsöffnung
- 1c: Stirnwand
- 2: Hauptgehäuse
- 2a: Mittelachse
- 2b, 2c: Aufnahmebohrung
- 2d: Stufe
- 2e, 2'e: Mantelraum
- 3; 4: Zylindermodul
- 3a; 4a: Zylindergehäuse
- 3b; 4b: Stirnwand
- 3c; 4c: Zylinderraum
- 3d; 4d: Druckraum
- 3e: Ringabschnitt
- 4e: Flanschabschnitt
- 3f; 4f: Verbindungsabschnitt
- 3g, 3h: Kragenabschnitt
- 3i: Durchgangsöffnung
- 3j: Öffnung
- 5; 7: Kolben
- 5a; 7a: Kolbendichtung
- 6: Kolbenstange
- 6a, 6b: Kolbenstangenende
- 6c: Aufnahme
- 6d: Mündung
- 6e: Druckstück
- 6f: Axialsicherung
- 8: Kolbenstange
- 8a, 8b: Kolbenstangenende
- 8c: Radialkanal
- 8d: Axialkanal
- 8e: Mündung
- 9: Kraftspeicherelement
- 10: Anschluss
- 10a: Entlüftung
- 10b: Filterelement
- 11: Mantelkanal
- 11a: Kanal
- 12, 12a: Dichtungselement
- 12b: Gewinde
- 12c: Sicherungselement
- 12d: Dichtungselement
- 13: Faltenbalg

- 100: Tandem-Bremszylinder

- EA1, EA2: Endabschnitt
- EWH: Exzenterwellenhebel
- DS: Deckel
- GA: Gehäuseabschnitt

## Patentansprüche

1. Kompakt-Bremszangeneinheit (1), insbesondere für Schienenfahrzeuge, mit einem Hauptgehäuse (2) und mit einem Tandem-Bremszylinder (100), **dadurch gekennzeichnet, dass**
der Tandem-Bremszylinder (100) mindestens zwei einzelne Zylindermodule (3, 4) aufweist, welche hintereinander in Reihe geschaltet in dem Hauptgehäuse (2) angeordnet sind.

2. Kompakt-Bremszangeneinheit (1) nach Anspruch 1, **dadurch gekennzeichnet, dass** in dem Hauptgehäuse (2) eine zentrale Aufnahme eingeformt ist, welche aus Aufnahmebohrungen (2b, 2) gebildet ist, die zu einer Mittelachse (2a) des Hauptgehäuses (2) koaxial sind, und in welcher der Tandem-Bremszylinder (100) angeordnet ist.

3. Kompakt-Bremszangeneinheit (1) nach Anspruch 2, **dadurch gekennzeichnet, dass** jedes der mindestens zwei einzelnen Zylindermodule (3, 4) ein Zylindergehäuse (3a, 4a) mit einem jeweiligen Kolben (5, 7) und mit einer jeweiligen Kolbenstange (6, 8) aufweist.

4. Kompakt-Bremszangeneinheit (1) nach Anspruch 3, **dadurch gekennzeichnet, dass** die Zylindergehäuse (3a, 4a) der mindestens zwei Zylindermodule (3, 4) in den Aufnahmebohrungen (2b, 2) des Hauptgehäuses (2) eingesetzt und befestigt sind.

5. Kompakt-Bremszangeneinheit (1), nach Anspruch 4, **dadurch gekennzeichnet, dass** die Kolbenstange (6) des ersten Zylindermoduls (3) mit einem ersten Kolbenstangenende (6a) mit dem Kolben (5) des ersten Zylindermoduls (3) verbunden ist und mit einem zweiten Kolbenstangenende (6b) mit einem Exzenterwellenhebel (EWH) einer Exzenterwelle der Kompakt-Bremszangeneinheit (1) gekoppelt ist und mit diesem zusammenwirkt.

6. Kompakt-Bremszangeneinheit (1) nach Anspruch 5, **dadurch gekennzeichnet, dass** das erste Kolbenstangenende (6a) der Kolbenstange (6) des ersten Zylindermoduls (3) eine Aufnahme (6c) für ein zweites Kolbenstangenende (8b) der zweiten Kolbenstange (8) aufweist.

7. Kompakt-Bremszangeneinheit (1) nach Anspruch 6, **dadurch gekennzeichnet, dass** die Aufnahme (6c) der ersten Kolbenstange (6) des ersten Zylindermoduls (3) ein Druckstück (6e) aufweist, welches mit dem zweiten Kolbenstangenende (8b) der zweiten Kolbenstange (8) zusammenwirkt.

8. Kompakt-Bremszangeneinheit (1) nach Anspruch 7, **dadurch gekennzeichnet, dass** Druckräume (3d, 4d) der mindestens zwei einzelnen Zylindermodule (3, 4) verbunden sind und einen gemeinsamen Anschluss für ein Druckmedium aufweisen.

9. Kompakt-Bremszangeneinheit (1) nach Anspruch 8, **dadurch gekennzeichnet, dass** die verbundenen Druckräume (3d, 4d) der mindestens zwei einzelnen Zylindermodule (3, 4) über die zweite Kolbenstange (8) verbunden sind.

10. Kompakt-Bremszangeneinheit (1) nach Anspruch 9, **dadurch gekennzeichnet, dass** die Aufnahme (6c) für die zweite Kolbenstange (8) in der ersten Kolbenstange (6) mit dem Druckraum (3d) des ersten Zylindermoduls (3) verbunden ist und mit einem Axialkanal (8d) in der zweiten Kolbenstange (8) kommuniziert, wobei der Axialkanal (8d) mit dem Druckraum (4d) des zweiten Zylindermoduls (4) kommuniziert.

11. Bremszylinder (1) nach Anspruch 7 oder 8, **dadurch gekennzeichnet, dass** der Druckraum (3d) des ersten Zylindermoduls (3) mit einem umlaufenden Mantelkanal (11) kommuniziert, wobei der Mantelkanal (11) zwischen zwei Kragenabschnitten (3h, 3i) des Zylindergehäuses (3a) des ersten Zylindermoduls (3), einer Außenseite dieses Zylindergehäuses (3a) und einer Innenwand einer Aufnahmebohrung (2b) des Hauptgehäuses (2) festgelegt und mit einem Anschluss (10) für ein Druckmedium verbunden ist.

12. Kompakt-Bremszangeneinheit (1) nach Anspruch 7, **dadurch gekennzeichnet, dass** die Druckräume (3d, 4d) der mindestens zwei Zylindermodule (3, 4) mit separaten Druckleitungen mit separaten Anschlüssen kommunizieren.
